Europäisches Patentamt

**European Patent Office**

Office européen des brevets

(19)

(11) Publication number: **0 185 632**

**A1**

(12)

# EUROPEAN PATENT APPLICATION

(21) Application number: **85850382.4**

(22) Date of filing: **26.11.85**

(51) Int. Cl.⁴: **B 05 B 1/34**
**B 01 F 3/02**

(30) Priority: **18.12.84 SE 8406437**

(43) Date of publication of application:
**25.06.86 Bulletin 86/26**

(84) Designated Contracting States:
**AT BE CH DE FR GB IT LI LU NL SE**

(71) Applicant: **Fläkt AB**
**Sickla Alle 1**
**S-131 34 Nacka(SE)**

(72) Inventor: **Johansson, Lars-Erik**
**Fornvägen 1**
**S-352 50 Växjö(SE)**

(74) Representative: **Lindblom, Erik J.**
**Skördevägen 88**
**S-122 35 Enskede(SE)**

(54) **An arrangement for mixing a first medium with a second medium in a contact reactor with the aid of one or more vortices.**

(57) The invention relates to an arrangement for mixing together in a contact reactor a flue gas flow (A) with an absorption medium (B) for absorption of and reaction with contaminants present in the flue gas, with the aid of one or more vortices (21a, 21b). the flue gas is conducted through a channel (2c), and the absorption medium is introduced into the flow of flue gas at a location in or adjacent the channel. Located in the channel (20) or in the immediate vicinity thereof is one or more vortex-generating elements (21, 22, 23, 24) having a configuration such as to generate at least two mutually counter-rotating and mutually adjacent vortices (21a, 21b) oriented in the flow of flue gas.

Fig 1.

TITLE OF THE INVENTION    An arrangement for mixing a first
                          medium with a second medium in a
                          contact reactor with the aid of
                          one or more vortices.


TECHNICAL FIELD

The present invention relates to an arrangement for mixing
a first medium, in the form of flue gas, with a second
medium, in the form of an absorbent material or substance
reactive with acid components in the flue gas, with the
aid of one or more vortices. In this arrangement the flue
gas is passed through a duct, a channel or the like and the
absorbent reactive material or substance is supplied to the
flue gas at a location in the channel or adjacent thereto.


BACKGROUND PRIOR ART

Arrangements and devices which enable a first medium to be
mixed with a second medium with the aid of vortices created
at least in the boundary layer between the two flowing media,
where the first medium is conducted through a location in
or adjacent to the region at which the second medium is
supplied are previously known per se, for example in so-
called contact reactors, in which the first medium, in the
form of contaminated flue gas, is cleansed by bringing said
gas into contact in the reactor with the second medium,
which has the form of an absorption material which is reactive with the contaminants present in the first medium. The
contaminants in the first medium are caused to mix and
react with absorption material, for example an aqueous
absorbent suspension, in the contact reactor, this reaction
between contaminants and absorbent taking place during the
time in which the contaminants and absorbent migrate in the
reaction chamber. The arrangement described and illustrated
in the European Patent Application No. 82110320.7, publication No. A2 0 079 081 is an example of the known prior
art in this respect.

In flue-gas cleansing contact-reactor arrangements the contaminating flue gases are normally mixed continuously
with lime particles suspended in a liquid mist or spray.
This mist is sprayed under high pressure and at a high
velocity, therewith to create turbulence in the boundary
layer between the spray jet and the flue gases, resulting
in natural mixing of the absorbent spray and the flue gases,
therewith to improve molecular diffusion between lime
particles and contaminants.

It is also known to mix media with the aid of guide vanes
effective to rotate the media globally, possibly with counter-directed vortices in the various flow strata. Mixing
processes such as these are effected when primary and
secondary air is introduced into an oil burner or powdered-
coal burner. A corresponding mixing process also takes place,
e.g. in the combustion chamber of a diesel engine, in which
cylinder body and piston are designed to create a rotational
vortex-like motion in the fuel/air mixture prior to ignition.

The need of mixing a first medium in liquid form with a
second medium, other technical contexts also in liquid
form or in aerosol form, i.e. droplets or particles suspended in a fluid with another fluid, to a greater or lesser
thoroughness is also to be found in other technical fields.

In general it can be said that in the majority of applications where two media are to be mixed together, it is desirable to obtain an effective exchange effect between the
two media. This exchange effect can be divided into one
or more of the following exchanges;
a) impulse exchange, where a transfer of kinetic energy
   is desired,
b) heat exchange, where a  transfer of thermal energy
   is desired,
c) phase conversion, where a transfer of one medium from
   one physical state to another is desired, for example from liquid phase to vapor phase, and

d)   chemical reaction, where a chemical compound is sought
     or is used as a means of, for example, recovering
     energy.

In all of these cases the two media shall be in contact with
one another, under given environmental conditions (temperature, pressure, etc.) over a period of time which is of sufficient duration for the desired exchange or conversion to
take place.

The arrangement illustrated and described in U.K. Patent
Specification No. 1 269 562 also forms part of the relevant
prior art. This known arrangement is effective in forcibly
mixing parallel gas or liquid flows with the aid of guide
vanes in the form of triangular plates mounted in uniform
spaced relationship along the edge of a partition wall
between the flows. These plates preferably have the shape
of an iscoceles triangle and the apices of the triangular
plates face towards the direction of medium flow. The bases
of respective plates form a trailing edge, and the respective apices of the plates are spaced from the partition
wall.

TECHNICAL PROBLEMS
With view to the present state of this art it will be seen
that one technical problem resides in the provision of
conditions which enable two media to be mixed together in
a contact reactor in a manner which will quickly afford the
desired end result, subsequent to a requisite exchange
effect.

A more qualified technical problem in this respect is one
of creating in a contact reactor an environment or conditions under which a desired exchange effect can be obtained
and providing sufficient time for the exchange to take
place, so as to ensure a wide, globular conversion over a long period of time, without needing to increase the
volume of a reaction chamber or reactor space.

With the aforesaid problems in mind, it will be seen that
a further technical problem is one of providing conditions
under which a desired yield, conversion and/or reaction
is satisfactorily achieved through a desired exchange
effect, without needing to take extraordinary power consuming and/or expensive structural measures.

Another technical problem is one of providing a reaction
chamber operating under such conditions that an effective
mixing effect can be achieved with the aid of turbulence,
without requiring to take measures which impart high relative velocities to the media to be mixed, with resultant
high energy losses.

When considering the aforementioned technical problems it
will be seen that a more qualified technical problem is
one of creating in the reaction chamber of a contact reactor conditions in which the turbulence or vortex-motion
generated extends deeply into the reaction chamber without
substantial energy losses, as opposed to the shallow and
limited extent which are created solely in the boundary
layer between the two media as a result of mixing the
incoming media at high medium velocities.

A further technical problem is one of creating conditions
in a reaction chamber of a contact reactor such that a
velocity vector of the flue gas is not heavily concentrated within the region of the chamber located in a geometric
extension of the inlet thereto, but such that the velocity
vectors are well distributed throughout the cross-section
of the reactor chamber.

When the second medium is injected into the reaction chamber
at high speed, for example from a spray nozzle, another chamber without substantial energy losses, as opposed to the shallow and limited extent which are created solely in the boundary layer between the two media as a result of mixing the incoming media at high medium velocities.

A further technical problem is one of creating conditions in a reaction chamber of a contact reactor such that a velocity vector of the chamber of the flue gas is not heavily concentrated within the region located in a geometric extension of the inlet thereto, but such that the velocity vectors are well distributed throughout the crosssection of the reactor chamber.

When the second medium is injected into the reaction chamber at high speed, for example from a spray nozzle, another technical problem is one of effectively retarding the speed of the absorbent medium.

It will be seen that a further technical problem prevailing when mixing together two media is one of providing a mixing process which affords improved mixing abilities, such that lower media inlet speeds can be permitted and used for the same mixing requirements, thereby reducing energy losses and also enabling the medium to enter the reaction chamber at a slower speed.

A further technical problem connected with the mixing of two media is one of providing a mixing process which will provide an improved mixing ability at the same level of energy consumption, thereby providing an improved exchange effect at lower speeds in the reaction chamber.

It will also be seen that a further technical problem resides in the provision of means for effectively mixing flue gas and absorbent medium with the aid of one or more vorticies, i.e. regions of turbulence.

It will be seen that a further technical problem prevailing
when mixing together two media is one of providing a mixing process which affords improved mixing abilities, such
that lower media inlet speeds can be permitted and used for
the same mixing requirements, thereby reducing energy
losses and also enabling the medium to enter the reaction
chamber at a slower speed.

A further technical problem connected with the mixing of
two media is one of providing a mixing process which will
provide an improved mixing ability at the same level of
energy consumption, thereby providing an improved exchange
effect at lower speeds in the reaction chamber.

It will also be seen that a further technical problem
resides in the provision of means for effectively mixing
flue gas and absorbent medium with the aid of one or more
vortices, i.e. regions of turbulence.

Finally, it will be seen that a further technical problem
resides in the understanding that one requisite for an
effective mixing of flue gas and absorption medium is to
first create a region turbulence, or a vortex, in the
flow of flue gas and to introduce the absorption medium
into a vortex-generating zone, by injecting an absorbent,
reactive mist into the flue gas flow with the aid of one or
more two-media spray nozzles, designed to mix air and
liquid, e.g. to produce liquid/particle suspensions.

SOLUTION
The present invention relates to an arrangement for enabling
a first medium, in the form of flue gas, to be mixed in a
contact reactor with a second medium, in the form of an
absorption material or substance reactive with acid components or other contaminants in the flue gas, with the aid of one or more vortices, in which the flue gas is arranged
to pass through a channel or duct into which, or adjacent
which the absorbent, reactive medium is introduced. It will
be understood that vortex is meant to include here, in the
aforegoing and hereinafter, a whirl, eddy current or like
swirling or turbulent motion.

In accordance with the invention one or more vortex-generating means is, or are arranged in the channel, or in the
immediate vicinity thereof. Said vortex-generating means are
constructed and arranged in a manner to generate at least
two mutually counter-directed vortices oriented in the
flow of flue gas medium and located adjacent one another
and/or side-by-side in spaced relationship. The vortex-
generating means is located in the path of flue gas flow
upstream of the location at which the absorptive reactive
medium is introduced thereinto. To this end the vortex-
generating means may present two or more edge surfaces which
diverge against and/or with the flow direction. The vortex-
generating means preferably includes a surface which faces
towards the flow direction. This surface of the vortex-
generating means is arranged at an angle of from 5 to 70$^{\circ}$,
preferably within an angular range of 15-40$^{\circ}$ in relation to
said flow direction.

In accordance with one advantageous embodiment of the
invention the vortex-generating means has the form of a
triangular element, the base portion of which faces downstream of the direction of flue gas flow. The vortex-generating means may advantageously comprise a plurality of
triangular elements, the base of respective elements facing
downstream. When the vortex-generating means comprises two
or more triangular elements, the apices of these elements
preferably diverge, although in accordance with an alternative embodiment may be caused to converge. When the vortex-
generating means comprises three or more triangular elements,
one or more apices may be diverging and one or more converging.

In order to generate counter-directed vortices, the vortex-generating means may suitably comprise two triangular elements with respective bases thereof located adjacent one another. These base parts of respective elements may be spaced apart, in a manner to form discrete counter-directed vortices.

In this case, the apices of the triangular elements are suitably attached to the defining surfaces of the channel. The channel in which the vortex-generating means is, or are arranged may have a polygone cross-section, such as a square cross-section.

In accordance with one particularly preferred embodiment of the invention, the vortex-generating means comprises four triangular elements positioned symmetrically in the channel. In accordance with another embodiment of the invention, the triangular elements are attached to a channel defining surface along an edge part of respective triangular elements. Although the vortex-generating means may have any suitable form, it is proposed that said means has a surface which projects in the channel in said flow direction such as to cover an area corresponding to 15-40%, suitably 20-30%, and preferably about 25% of the channel cross-section.

In accordance with another advantageous embodiment of the invention, two triangular elements are positioned in one and the same plane and located at a distance from one corner of the channel, when of right-angled cross-section. Alternatively, two triangular elements may be arranged at an angle to one another and located at a distance from one corner in the channel.'

As beforementioned, the present invention is suitable for use in a contact reactor in which a flue gas is mixed with and reacted with an absorption material in order to extract acid components from said gas. The absorption medium is supplied to a region of turbulence in the flue gas flow
at a location spaced downstream of the vortex-generating
means through a distance equal to one channel width or
channel diameter, as seen in the direction of flow.

ADVANTAGES

Those advantages primarily afforded by an arrangement
according to the present invention reside in the provision
of means whereby a vortex can be created in the flow of
medium in a contact reactor, such as to ensure that a flow
of flue gas is effectively mixed with an absorbent medium,
without excessively high energy losses.

In addition, there is provided simple ways and means of
producing an effective turbulence so as to obtain a large
exchange effect between the two media.

----------------

The primary characteristic features of an arrangement for
mixing a flow of flue gas with an absorbent reactive medium
in a contact reactor with the aid of one or more vortices,
such as to obtain an effective exchange effect between the
media, where the flue gas is arranged to pass through a
channel into or adjacent which the absorbent medium is
supplied in accordance with the present invention are set
forth in the characterizing clause of the following Claim 1.

----------------

BRIEF DESCRIPTION OF THE DRAWINGS

A number of proposed embodiments having features characteristic of the present invention will now be described in more
detail with reference to the accompanying drawings, in
which;

Figure 1 is a sectional view of an arrangement arranged in
        the upper part of a contact reactor and effective
        to mix a flow of flue gas with an absorption medium medium with the aid of a spray nozzle, such that
contaminants present in the flue gas react with
powdered-lime suspended in the absorption medium
or partially dissolved therein;

Figure 2 illustrates curves representing a velocity vector
distribution in the reaction chamber at a first
distance from a spray nozzle having the location
illustrated in Figure 1;

Figure 3 illustrates curves representing a velocity vector
distribution in the reactor chamber at a further,
greater distance from the spray nozzle positioned
in accordance with Figure 1;

Figure 4 is a perspective view of a triangular fin, utilizing the basic principles of the present invention;

Figure 5 is a perspective view of a first embodiment of an
arrangement constructed in accordance with the
invention, this arrangement being effective to
generate a vortex, turbulence, in a flue gas flow,
with but small energy losses;

Figure 6 is a perspective view of a second embodiment of an
arrangement constructed in accordance with the
invention; and

Figure 7 is a perspective view of a third embodiment of an
arrangement constructed in accordance with the
invention.


DESCRIPTION OF PREFERRED EMBODIMENTS

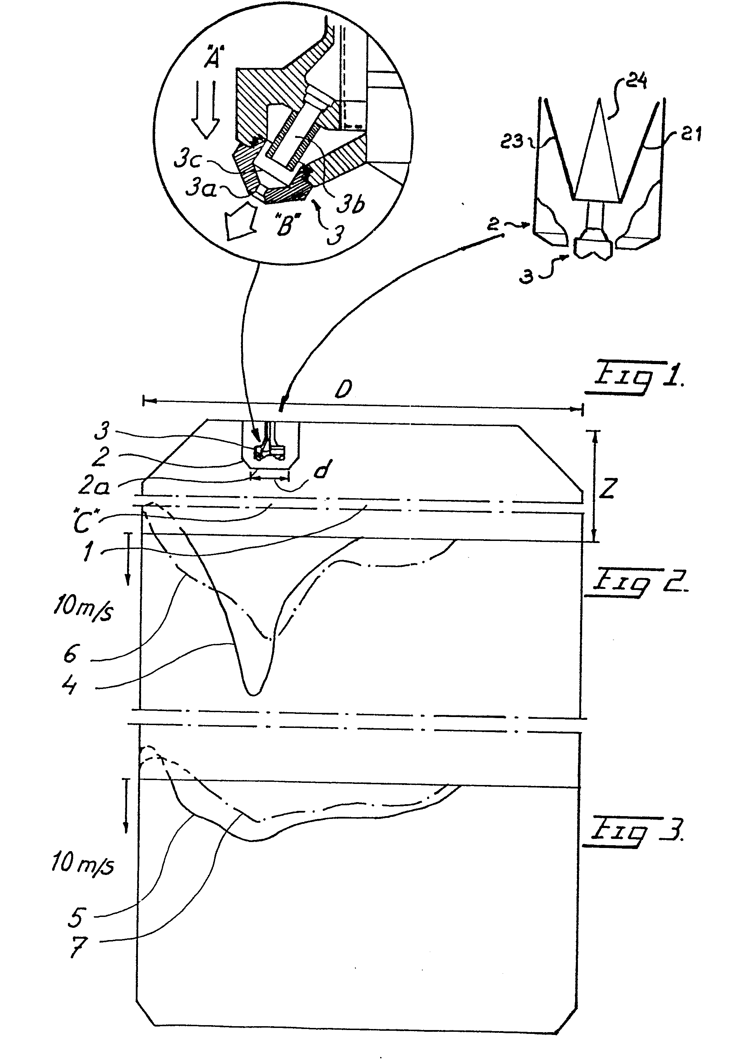

Figure 1 is a sectional view of an upper part of a contact
reactor and illustrates a spray nozzle for mixing flue gas
with an absorptive and reactive medium in a reaction chamber
1, this spray nozzle being only one of a number of such
nozzles.

The flue gas is assumed to be contaminated with acid
components, and the absorptive medium is delivered in the
form of an air jet bearing a liquid mist or spray, such as
a water mist, having powdered lime suspended or partially dissolved therein, these two media being mixed together
so as to obtain a chemical reaction between the acid
contaminants and the lime absorbent.

In the illustrated embodiment, the reaction chamber 1 is
assumed to be of circular cylindrical configuration, having
a diameter "D". The flow of flue gas, here referenced "A",
is fed to the reactor chamber 1 through a channel 2, where
it is brought into contact with the absorption medium "B",
entering through a spray nozzle 3, the absorption medium
having the form of an air jet carrying a water mist or
spray in which powdered lime is suspended, or partially
dissolved.

The flue gas "A" is transported through the channel 2
with the aid of a fan or the like and a vortex, or region
of turbulence, is created therein upstream of the nozzles
3 by means of the means 10 in a manner hereinafter described, whereas the absorption medium "B" is sprayed from the
nozzle with the aid of air under pressure. A given, small
and additional turbulence is therewith created at the interface or boundary layer between the two meeting media "A"
and "B".

The two media "A" and "B" pass in mixture with one another
through the exit orifice 2a of the channel 2 at speed,
with the velocity vectors directed substantially vertically
downwards in the reactor chamber. The diameter of the exit
orifice, or mouth, of the channel 2 is designated "d".

When the spray nozzle 3 is of a known kind, such as the
nozzle illustrated and described in the European Patent
Application published under number A2 0 079 081, incorporating an outlet orifice 3a, an air jet 3b and a mixing chamber 3c, as shown in the illustrated embodiment, it has been
found that there is obtained at a distance Z = 0.78D
from the roof of the reactor chamber in the absence of vortex-generating means 10 a velocity distribution according to the full line 4 shown in Figure 2, The full line 5 in Figure 3 illustrates the velocity distribution obtained when the said distance is Z = 1.53D.

It will be seen from this that the velocity of the incoming mixture is relatively high, and has a pronounced maximum beneath the nozzle 3. Moreover, no pronounced turbulence is generated. Those molecules having the greatest velocity leave the reactor in the space of about one second, despite the fact that the reactor is from ten to twenty meters high.

This means that there is not sufficient time for contaminants and reactive particles tomix thoroughly , or to effectively develop chemical compounds, within the region located in the geometric extension of the outlet prior to being transported to the bottom of the reaction chamber.

The flue gases "A" pass the spray nozzles substantially in laminar flow, when the vortex-creating means are not provided, and the absorption medium "B" will impart to the flue gases "A" an accelerating movement in a direction towards the bottom of the reaction chamber.

It is therefore desired in this regard to be able to distribute this velocity more uniformly and more widely, with more developed turbulence, so that the two media are mixed with sufficient thoroughness, and so that there is afforded sufficient time in which to effectively form chemical compounds.

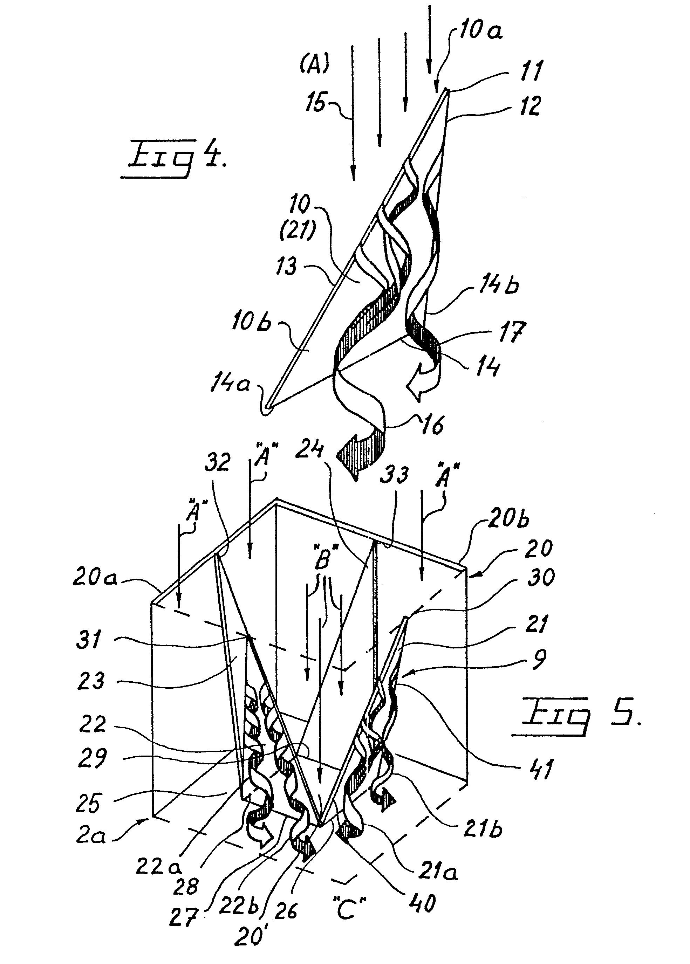

When, on the other hand, an arrangement according to the invention illustrated in Figure 5, is placed in the channel 2 in the path of the flue gases "A", counter-directed vortices  are formed in said gases before they pass the spray nozzle 3, therewith creating the velocity distribution illustrated by the curve 6 in Figure 2 and the curve 7 illustrated in Figure 3. These curves clearly show, especially the curve 6, that a more favourable distribution is obtained in this way, together with a radical
reduction in the maximum value of velocity distribution.
The shortest residence time in the reactor is now more
than twice as long as that obtained in the previously
described embodiment.

A mixture of a stream of flue gas contaminated with acid
components and a water spray or mist having powdered lime
suspended and/or dissolved therein is referenced "C" in
Figure 1.

With the previously known spray nozzle 3 and laminar flow
of the flue gases "A", the mixed gas flow "C", particularly
along the symmetry axis of the inlet, will be transported
through the reaction chamber at such high speed that the
lime present in the absorptive medium "B" is unable to
react effectively with the contaminants contained in the
flue gas flow.

An arrangement having the form of a triangular, fin-like
element 10 and functioning in accordance with the basic
principles of the present invention will now be described
with reference to Figure 4.

The triangular fin-like element 10, hereinafter referred to
as the delta-fin, has an apex 11, two edge portions 12,13,
and a base 14.

When, for example, an air jet or air stream 15 impinges on
one planar side (the hidden side) of the delta-fin 10, with
the apex 11 thereof facing against the flow, an area of high
pressure will be formed on the side 10a facing the air jet
15. This increase in pressure creates conditions under which
part of the air flow is caused to "roll" along the sides or
edge portions 12 and 13 of the delta-fin. These rolling air
flows form a pair of counter-rotating vortices 16 and 17, which move along the other side 10b of the delta-fin 10, in the same direction as the flow direction of the air jet 15. The angle of incidence of the air stream 15 against the delta-fin 10 may varyfrom between $5^{\circ}$ to $70^{\circ}$, preferably from $15-40^{\circ}$.

As will be seen from Figure 4, the delta-fin 10 forms mutually counter-directed vortices 16,17 which are located adjacent one another along the flow path of the air stream or air jet 15. It will be understood that air will roll over the whole of the surface 13, therewith to generate in the flow direction a vortex which is rotated anti-clockwise and which increases along the surface 13, and thus the vortices illustrated in the figures represent solely a part of the total vortex complex generated.

The extent to which a vortex is formed by the vortex-generating edge is contingent on the projection of said edge against the flow direction. The extent of this projection determines the magnitude of the vortex. The vortices are counter-directional, in order not to obtain global rotation. The vortices should not be located too closely together, or overlap one another.

The extension of the vortices generated should scarcely exceed half the projected surface of the delta-fin in the flow direction. The magnitude of the vortex can be increased by inclining the delta-fin more steeply in the flow direction.

The outer defining layer of the vortex 16 is limited by the edge 14a, whereas the outer defining layer of the vortex 17 is limited by the edge 14b. At the correct angle of incidence between the air jet 15 and the delta-fin 10 in relation to the velocity of the air jet 15, respective vortices will obtain an outer diameter slightly smaller than half the length of the base part 14.

Figure 5 is a perspective view of a first embodiment of an arrangement incorporating one or more vortex-generating fins enabling a first medium "A" to be mixed with a second medium "B", in which the first medium "A" passes through a channel 20 having arranged therein a vortex-generating means 9 in the form of four triangular elements 21-24.

Although the illustrated embodiment is described and illustrated with respect to mixing two media "A" and "B" with the aid of vortices, it will be understood that the arrangement can also be used in those cases where a vortex is to be generated in a single medium.'

Although the first medium "A" preferably has laminar flow through the channel, the invention can also be applied effectively in the case of turbulent medium flow.

The same also applies in accordance with the invention to the second medium "B", which although preferably having a substantially laminar flow, may also have a turbulent flow, therewith to provide an improved effect.

It will be understood that the general concept of the invention allows the two media to be brought together either upstream of the vortex-generating means 9, immediately adjacent said means, or in the proximity of said means and/or downstream thereof. A particular advantage is afforded, however, when the second medium "B" is supplied to the first medium "A", in a contact reactor at a high speed relative to the speed of said first medium, these media being brought together at a location at which a vortex or vortices is, or are, generated in the medium "A", or at which said medium has a pronounced turbulent flow.

Thus, in the Figure 5 embodiment the channel 20 has arranged therein four delta-fins 21,22,23 and 24 substantially similar to the delta-fin 10 of the Figure 4 embodiment. Each of the delta-fins has a configuration which generates at least two mutually counter-directed and mutually adjacent vortices at a location in the flow of the first medium "A". Thus, the fin 21 will form a vortex 21a and a vortex 21b, the fin 22 will form a vortex 22a and a vortex 22b, etc.

It will be understood that the fins 21-24 may well be arranged in the immediate proximity of the inlet end of the channel, and may even be located externally of the channel. The vortex-generating fins are preferably located at a distance of one channel width or channel diameter upstream or downstream of the mouth 2a of the channel 2 when seen in the flow direction. The second medium is advantageously supplied to a first medium subjected to vortex building upstream and/or downstream of the vortex-generating means at a distance therefrom of up to one channel width or channel diameter.

The second medium "B" is, in all events, supplied to the first medium "A" such that the media are mixed with the aid of a vortex or turbulence effect. In the illustrated embodiment, the medium "B" may be supplied to the medium "A" at a location adjacent to or downstream of a plane 25 passing through the base portions of the fins 21-24.

Since the fins 21,22,23 and 24 are mutually identical, reference will be made solely to the effect and construction of the fin 21 hereinafter.

The fin 21 presents straight edge lines and has a delta-configuration having a base 26 which faces generally downstream and an apex 30 which faces generally upstream. The fin 21 is arranged in a plane which forms an angle with the flow direction of the first medium "A".

Figure 5 illustrates a complete vortex-generating means 9, incorporating a plurality of mutually identical and mutually co-acting triangular fins 21-24, so positioned that the respective base parts 26,27,28 and 29 of the fins point in the downstream direction of the flow of the medium "A". The base parts 26,27,28 and 29 of respective fins 21-24 are located adjacent one another in a manner to define a central opening 20' intended for passage of the second medium "B". The tips or apices 30,31,32 and 33 of the triangular fins diverge uniformly. The apex 32 is attached to one edge part 20a of the channel 20, whereas the apex 33 is attached to a further edge part 20b of said channel, etc..

Although the channel 20 of the illustrated embodiment has a square cross-section it will be understood that the channel may have any suitable cross-sectional shape, for example a circular shape.

Thus, as illustrated in Figure 5, the four apices of the triangular fins are each attached to a respective defining surface of the channel.

Although the base parts 26,27,28 and 29 of the illustrated embodiment are attached to one another, it will be understood that the bases of respective fins may be spaced apart, thereby to create vortices, where the outer defining surfaces of said vortices are located at a distance from one another.

The apices of given triangular fins, for example the apices 31,33, may converge and be attached to one another.

The triangular fins 21,22,23 and 24 are arranged in the flow direction of the medium "A" in the channel 20 so as to cover a cross-sectional area thereof corresponding approximately to 15-40% of the total cross-sectional area of said channel. Suitably the area covered by said fins corresponds to 20-30% of the total cross-sectional area of said channel, preferably about 25%.

Respective fins present at least one vortex-creating edge part. In the Figure 5 embodiment each fin has two such edge parts 40,41 the length of these edge parts from the base 26 to the apex 30 of the associated fin corresponds approximately to the width of diameter of the channel.

The triangular fin 21 is positioned in relation to the flow direction of the first medium "A" in a manner to obtain an angle of incidence of 50-70$^O$, preferably of 15-40$^O$, suitably of about 30$^O$.

The media are mixed more effectively when the speed at which the medium "B" travels is greater than that of the medium "A". The medium "B" may also be injected into the medium "A" with the aid of spray nozzles 3 of the kind illustrated in Figure 1.

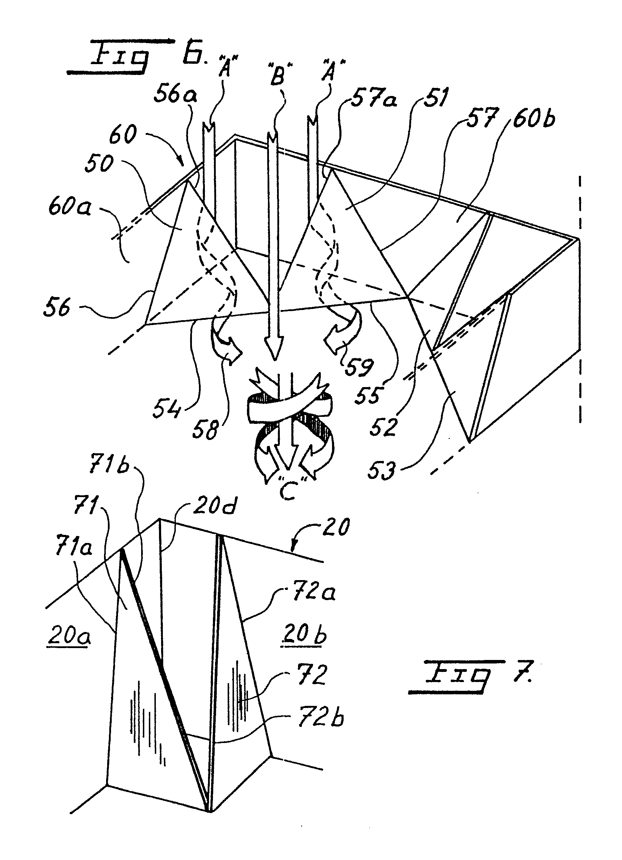

Figure 6 illustrates a part 60 of a complete channel, having incorporated therein a second embodiment of the invention comprising a plurality of triangular fins 50,51, 51 and 53. As illustrated in Figure 6, the base part 54 of the fin 50 is located adjacent the base part 55 of the fin 51, whereas an edge part 56 is attached to a side part 60a of the channel 60, therewith to form a vortex-generating edge part 56a.

Similarly, the fin 51 has an edge part 57 attached to a side part 60b of the channel 60, such that an edge part 57a forms a vortex-generating edge portion, so that at least two mutually adjacent and mutually counter-directed vortices 58,59 are created along the flow path of the first medium "A".

These vortices 58,59 are effective to mix the first medium with the second medium "B", to form a mixture "C".

Figure 7 illustrates a third embodiment of the invention located in one corner 20d of a channel 20. In this embodiment, two elements 71 and 72 forming a right angle with one another are placed in the same corner.

The edge part 71a is attached to the side part 20a of the channel while forming an angle of incidence to the first medium, whereas the edge part 72a is attached to the side part 20b of the channel in a like manner. The edge parts 71b and 72b form vortex-generating surfaces.

In all embodiments the angle of incidence presented by the various vortex-generating elements shall be of mutually different values, in order to generate vortices of mutually different magnitudes. The vortex-generating edge parts may also be mutually different for the same purpose.

The invention is not restricted to the aforedescribed exemplifying embodiments, and modifications can be made within the scope of the following claims.

CLAIMS

1.  An arrangement for mixing a first medium, in the form of flue gases, with a second medium, in the form of an absorption medium, in a contact reactor for an absorption of acid components in said flue gases in said contact reactor, into which the flue gases are arranged to pass through a channel and in which or adjacent which the absorption medium is introduced, whereby with the aid of one or more vortex-generating means is, or are, located in the channel or in the immediate vicinity thereof; and oriented in a manner to generate at least two mutually adjacent and mutually counter-directed vortices in the flue-gas flow, c h a r a c t e r i z e d  in that the vortex-generating means (10) are located upstream of the flue-gas flow in relation to the region of which the absorption medium is supplied to said flue-gas flow.

2.  An arrangement according to claim 1, c h a r a c t e r i z e d  in that the vortex-generating means (10) presents two or more diverging edge surfaces (12,13).

3.  An arrangement according to claim 1 or 2, c h a r a c t e - r i z e d  in that the vortex-generating means (10) is positioned so as to present a surface (23) which faces against the flow direction.

4.  An arrangement according to claim 1, 2 or 3, c h a r a c t e - r i z e d  in that the vortex-generating means (10) is positioned at an angle of from 5 to 70$^0$, preferably from 15-40$^0$ relative to the flow direction.

5.  An arrangement according to claim 1 or 4, c h a r a c t e - r i z e d  in that the vortex-generating means (10) comprises a triangular element, whose base part faces downstream in the direction of flow of the flue gases.

6. An arrangement according to claim 1 or 4, c h a r a c t e - r i z e d  in that the vortex-generating means (10) comprises a plurality of triangular elements (21,22,23,24), whose respective base parts face downstream.

7. An arrangement according to claim 6, c h a r a c t e r i z e d in that the vortex-generating means (10) comprises of two or more triangular elements whose apices diverge.

8. An arrangement according to claim 6, c h a r a c t e r i z e d in that the vortex-generating means (10) comprises of two or more triangular elements, whose apices converge.

9. An arrangement according to claim 6, c h a r a c t e r i z e d in that the vortex-generating means (10) comprises three or more triangular elements where certain of the apices of said elements diverge and where the apices of other elements converge.

10. An arrangement according to claim 6, c h a r a c t e r i z e d in that the vortex-generating means (10) comprises at least two triangular elements whose base parts are arranged adjacent one another to generate mutually adjacent counter-directed vortices.

11. An arrangement according to claim 6, 7 or 8, c h a r a c t e - r i z e d in that the base parts of said elements are spaced apart, to generate mutually spaced counter-directed vortices.

12. An arrangement according to claim 6, 7, 10 or 11, c h a r a c- t e r i z e d in that the elements are attached to the defining surfaces of the channel at the apices of said elements.

13. An arrangement according to claim 6, 7, 10, 11 or 12, c h a - r a c t e r i z e d in that the vortex-generating means (10) comprises four triangular elements arranged symmetrically in the channel.

14. An arrangement according to Claim 6, c h a r a c t e r i z e d in that a base part of the triangular elements is attached to the defining surface of the channel.

0185632

15. An arrangment according to claim 1, c h a r a c t e r i z e d
in that the vortex-generating means (10) is arranged to cover an
area corresponding to 15-40%, for example 20-30%, preferably about
25%, of the cross-sectional area of the channel, seen in the flow
direction.

16. An arrangement according to claim 6, 12 or 14, in which the
channel has a polygonal cross-section, c h a r a c t e r i z e d  in
that two triangular elements are positioned in one and the same
plane and located at a distance from one corner of the channel.

17. An arrangement according to claim 6, 12 or 14, in which the
channel has a polygonal cross-section, c h a r a c t e r i z e d  in
that two triangular elements are positioned at an angle to one another and located at a distance from one corner of the channel.

18. An arrangement according to claim 1, c h a r a c t e r i z e d
in that the absorption medium comprises an aqueous suspension of
lime particles finely divided with the aid of pressurized air and a
two-media spary nozzle.

19. An arrangement according to claim 1, c h a r a c t e r i z e d
in that the absorption medium is supplied to the flue gases downstream of the vortex-generating means (10), when seen in the flow
direction, at a distance from said means corresponding to one channel width or channel diameter.

20. An arrangement according to claim 1, c h a r a c t e r i z e d
in that the first medium is a flue gas deriving from the combustion
of fossile materials.

21. An arrangement according to claim 1, c h a r a c t e r i z e d
in that the vortex-generating edge surface (12,13) has a length
corresponding substantially to the width or diameter of the channel.

22. An arrangement according to claim 1, c h a r a c t e r i z e d
in that the edge surfaces of the vortex-generating means are of
mutually different lenghts, so as to form vortices of mutually different magnitudes.

23. An arrangement according to claim 1, c h a r a c t e r i z e d
in that the angle of incidence presented by different edge surfaces
of the vortex-generating means are of mutually different values, so
as to generate vortices of mutaullay different magnitudes.

0185632

_Fig 1._

_Fig 2._

_Fig 3._

0185632

Fig 4.

Fig 5.

Fig 6.

Fig 7.

0185632

# EUROPEAN SEARCH REPORT

Application number

EP 85 85 0382.4

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | SE-B- 320 225 (SVENSKA FLYGMOTOR AB) *Page 2, lines 24-32; page 3 lines 29-34* | 1-6 | B 05 B 1/34 B 01 F 3/02 |
| : | &GB-A- 1 269 562 (SVENSKA FLYGMOTOR AB) - - - | | |
| X | US-A- 2 676 650 (R.C. BRIERLY) * Column 2, lines 11-32; figure 1* - - - | 1-6 | |
| A | DK-C- 660 (KØBMAND EMIL ERNST) - - - | | |
| A | F.R.-A- 2 197 127 (THE A.P.V. COMPANY LIMITED) - - - | | |
| A | EP-A- 0 119 642 (HOOGOVENS GROEP B.V.) - - - | | |
| A | US-A- 1 312 147 (J.M. WALLWIN) - - - | | |

| TECHNICAL FIELDS SEARCHED (Int. Cl.4) |
|---|
| B 01 D B 01 F B 05 B F 15 D F 23 C F 23 D F 23 R |

The present search report has been drawn up for all claims

| Place of search | Date of completion of the search | Examiner |
|---|---|---|
| STOCKHOLM | 30-01-86 | SALEN B |